Europäisches Patentamt

European Patent Office

Office européen des brevets

(11) Veröffentlichungsnummer : **0 455 976 B1**

(12) **EUROPÄISCHE PATENTSCHRIFT**

(45) Veröffentlichungstag der Patentschrift :
**01.06.94 Patentblatt 94/22**

(21) Anmeldenummer : **91104605.0**

(22) Anmeldetag : **23.03.91**

(51) Int. Cl.$^5$ : **A23B 7/02, A23B 7/148**

(54) **Verfahren zum Trocknen von stückigen, biologischen Produkten.**

(30) Priorität : **02.04.90 DE 4010594**

(43) Veröffentlichungstag der Anmeldung :
**13.11.91 Patentblatt 91/46**

(45) Bekanntmachung des Hinweises auf die
Patenterteilung :
**01.06.94 Patentblatt 94/22**

(84) Benannte Vertragsstaaten :
**CH ES FR IT LI NL**

(56) Entgegenhaltungen :
**EP-A- 0 252 155**

(56) Entgegenhaltungen :
**EP-A- 0 363 553**
**EP-A- 0 406 650**
**WO-A-86/01686**
**DE-A- 3 417 125**
**US-A- 4 421 020**

(73) Patentinhaber : **BUCHER-GUYER AG**
**Maschinenfabrik**
**CH-8166 Niederweningen (CH)**

(72) Erfinder : **Gass, Ernst**
**Kirchstr. 6**
**CH-5027 Herznach (CH)**
Erfinder : **Hinz, Wolfgang**
**Opfenauweg 9**
**CH-5400 Baden (CH)**

EP 0 455 976 B1

Jouve, 18, rue Saint-Denis, 75001 PARIS

**Beschreibung**

Die vorliegende Erfindung betrifft ein Verfahren gemäss dem Oberbegriff des Anspruches 1.

Bei den bekannten Verfahren wird bei der Trocknung von stückigem Gemüse und Obst das Puffen oder die Expansion angewendet, um die Trocknung zu unterstützen. Dabei wird von einem Ueberdruck von mehreren Bar auf Atmosphärendruck entspannt. Dabei tritt eine Strukturänderung ein, weil die aufgeschlossenen Zellen teilweise kollabieren. Die Produkte haben eine härtere und zähere Struktur.

Aus dem internen Stand der Technik ist eine Anlage bekannt, bei der von Atmosphärendruck auf Vakuum entspannt wird. Es ist jedoch vorgesehen, mit der thermischen Behandlung eine Befeuchtung mit Wasserdampf vorzunehmen. Als nachteilig erweist sich hierbei, dass das Vakuum sehr langsam erreicht wird, wodurch ein Druckausgleich über Diffusion und folglich ein zu niedriger Druckgradient auftritt.

Ziel der Erfindung ist ein Verfahren zum Trocknen von stückigen, biologischen Produkten so zu verbessern, dass die genannten Nachteile nicht auftreten, bei dem der volle Nahrungsfasergehalt erhalten bleibt und das ohne chemische Zusätze auskommt.

Dieses Ziel wird erfindungsgemäss mit den kennzeichnenden Merkmalen des Anspruches 1 erreicht.

Die mit der Erfindung erzielbaren Vorteile sind im wesentlichen darin zu sehen, dass die Produkte weitgehend ihre Kontur behalten, im hohen Umfang porös werden, wodurch eine hohe Wasseraufnahme ermöglicht wird, aufgrund der niedrigen Erwärmung eine hohe Vitaminstabilität erkennbar ist und es sich hierbei um ein rein physikalisches Verfahren handelt.

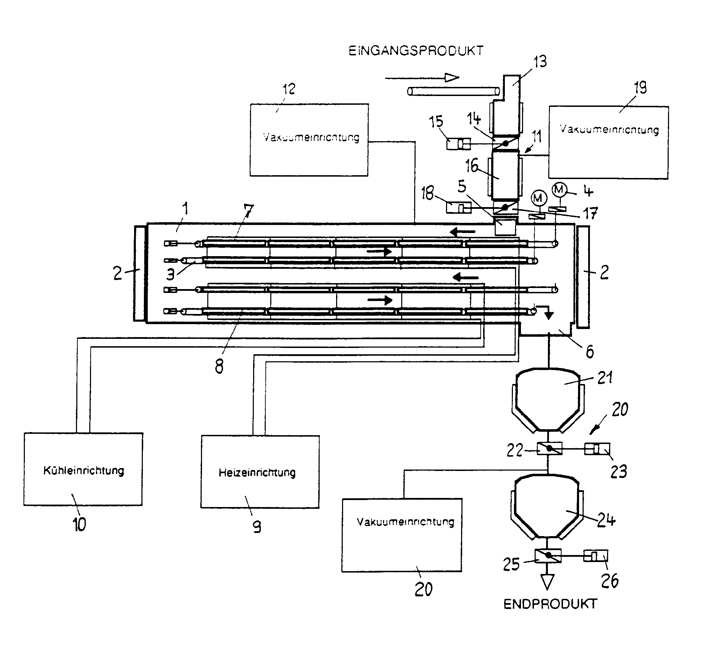

Im folgenden wird die Erfindung anhand der beiliegenden Zeichnung näher erläutert, die ein Blockschema eines bevorzugt verwendeten Einkammer-Vakuumbandtrockners, zur Durchführung des Verfahrens zeigt.

Der Einkammer-Vakuumbandtrockner wird z.B. zum Trocknen von Apfelscheiben verwendet. In einem zylindrischen, liegenden Behälter 1, der beidseitig durch Tore 2 abgeschlossen ist, sind vier Förderbänder 3 übereinanderliegend angeordnet. Die Bänder 3 sind in der Höhe zueinander beabstandet und in der Länge zueinander versetzt montiert und werden durch aussenliegende Antriebsvorrichtung 4 angetrieben. Der Behälter 1 weist einen obenliegenden Einlassstutzen 5 und einen untenliegenden Auslassstutzen 6 auf, die im Bereich eines Behälterendes vorgesehen sind. Dadurch erfolgt die Zufuhr der zu trocknenden Apfelscheiben von oben und die Abgabe der getrockneten Apfelscheiben nach unten.

Zwischen dem oberen und unteren Trum der zwei obenliegenden Förderbänder 6 sind eine Anzahl von plattenförmigen Heizelementen 7 nebeneinanderliegend so angeordnet, dass das obere Trum mit der Oberseite der Heizelemente 7 in Kontakt steht, um die Wärmeenergie via das obere Trum auf das Produkt zu übertragen. Zwischen den unteren Förderbändern sind plattenförmige Kühlelemente 8 nebeneinanderliegend angeordnet, um ähnlich wie bei den Heizelementen die Kälteenergie auf das obere Trum bzw. das Produkt zu übertragen.

Die Heiz- bzw. Kühlelemente werden von Steuereinrichtung 9 bzw. 10 gesteuert. Der Behälterdruck wird durch eine Vakuumeinrichtung 12 erzeugt.

Am Einlassstutzen 5 ist eine Eintragschleuse 11 angeschlossen. Der Druck in der Eintragschleuse 11 wird durch eine Vakuumeinrichtung 19 erzeugt. Diese Eintragschleuse umfasst einen Einlassbehälter 13, ein dem letzteren nachgeschaltetes Ventil 14, die eine pneumatische Antriebseinrichtung 15 hat, einen Zwischenbehälter 16 und ein zweites Ventil 17, die den Zwischenbehälter 16 mit dem Einlassstutzen 5 verbindet und eine pneumatische Antriebseinrichtung 18 aufweist. Der Einlassstutzen 5 ist kombiniert mit einer Dosiervorrichtung, um das Produkt gleichmässig auf das oberste Band zu verteilen.

Am Auslassstutzen 6 ist eine Austragschleuse 20 montiert. Die Austragschleuse 20 umfasst einen Zwischenbehälter 21, der am Auslassstutzen 6 angeschlossen ist, eine erste Klappe 22, die dem Zwischenbehälter nachgeschaltet ist und eine pneumatische Antriebseinrichtung 23 enthält, ein Abgabebehälter 24, der der Klappe 22 nachgeschaltet ist und eine Austragklappe 25 mit einer pneumatischen Antriebseinrichtung 26. Der Druck in der Austragschleuse 20 wird durch eine Vakuumeinrichtung 27 erzeugt.

Bei dem hier in Rede stehenden Verfahren wird das zu trocknende Produkt in einer in der Figur nicht dargestellten Einrichtung entweder erwärmt oder auf eine konstante Temperatur gehalten. Diese Erwärmung wird beispielsweise mittels dielektrischer Effekte durchgeführt, weil dadurch in vorteilhafter Weise eine Verhornung der Oberflächen vermieden werden kann und sich ausserdem gleichmässige Produkttemperaturen einstellen. Nach dieser Vorbehandlung wird das Produkt als Eingangsprodukt in einen Vorratsbehälter eingebracht, worin es seine Temperatur beibehält. Aus diesem Vorratsbehälter wird das Produkt über ein Ventil 14 zur Druckbehandlung in einen Druckbehälter 16 eingebracht. In diesem Behälter wird das Produkt einem Ueberdruck ausgesetzt, der vom Eingangsprodukt abhängig ist und bis zu 15 bar betragen kann. Der Druck wird beispielsweise mit Inertgas, trockener Luft, Kohlendioxid sowie Mischungen davon aufgebaut. Das wird bis zu 105 Minuten diesem Ueberdruck ausgesetzt. Anschliessend wird das Produkt über ein zweites Ventil 17 in einen Vakuumbandtrockner geschleust, der unter Unterdruck steht. Der Uebergang von Druckbehandlung zur Expansion ist dermassen gestaltet, dass ein möglichst grosser Druckgradient, z.B. p > 1 bar während einer kleinen Zeitspanne von < 30 Sekunden auftritt. Dabei werden die Zellen aufgeschlossen und wegen der kurzen Zeitspanne tritt kein Druckausgleich durch Diffusion auf. Diese Vorgänge sind wesentliche Bestandteile des Verfahrens.

Beim Verfahren nach Anspruch 1 können die Produkte aus einem Überdruck der > 1,1 bar ist, direkt in das Vakuum entspannt werden. Weiterhin kann die Überdruckbehandlung beim Verfahren gemäß Ansprüche 1 bis 6 mindestens 10 Sekunden dauern.

Nachfolgend werden Beispiele zur Trocknung von verschiedenen Produkten angegeben:

Beispiel 1

Zu trocknendes Produkt: Apfelscheiben

| | |
|---|---|
| Ausgangsfeuchte | bis 25% |
| Eingangstemperatur | bis 105° C |
| Druckbereich der Vorbehandlungskammer | bis 15 bar |
| Verweildauer | bis 105 min. |
| Expansion im Vakuumgefäss mit Absolutdruck | bis 900 m bar |
| Endfeuchte | bis 8%, vorzugsweise weniger als 2% |

Beispiel 2

Zu grocknendes Produkt: Zwiebeln

| | |
|---|---|
| Ausgangsfeuchte | bis 65% |
| Eingangstemperatur | bis 130° C |
| Druckbereich der Vorbehandlungskammer | bis 3 bar |
| Verweildauer | bis 5 Min. |
| Expansion im Vakuumgefäss mit Absolutdruck | bis 50 m bar |
| Endfeuchte | bis 8%, vorzugsweise weniger als 2% |

**Patentansprüche**

1. Verfahren zur Behandlung von stückigen, biologischen Produkten, wobei die Produkte einer thermischen Behandlung, einer Expansion ins Vakuum und einer Trocknung im Vakuum unterworfen werden, dadurch gekennzeichnet, dass die Produkte einer Ueberdruckbehandlung mit einem gasförmigen Medium ausgewählt aus der Gruppe Inertgas, trockene Luft, Kohlendioxid und Mischungen derselben unterzogen und anschliessend mit mindestens einem p > 1 bar ins Vakuum entspannt werden.

2. Verfahren nach Anspruch 1, dadurch gekennzeichnet, dass die Produkte aus einem Ueberdruck direkt in das Vakuum entspannt werden, wobei der Ueberdruck > 1,1 bar ist.

3.  Verfahren nach einem der Ansprüche 1 oder 2, dadurch gekennzeichnet, dass die Produkte in einer Vorbehandlungsstufe entspannt werden.

4.  Verfahren nach einem der Ansprüche 1 oder 2, dadurch gekennzeichnet, dass die Produkte in der Trocknungsstufe entspannt werden.

5.  Verfahren nach einem der Ansprüche 1 bis 4, dadurch gekennzeichnet, dass die Entspannung während eines Zeitraumes < 30 Sek. erfolgt.

6.  Verfahren nach einem der Ansprüche 1 bis 5, dadurch gekennzeichnet, dass zur Erwärmung der Produkte dielektrische Effekte ausgenutzt werden.

7.  Verfahren nach einem der Ansprüche 1 bis 6, dadurch gekennzeichnet, dass die Ueberdruckbehandlung mindestens 10 Sekunden dauert.

8.  Verfahren nach einem der Ansprüche 1 bis 7, dadurch gekennzeichnet, dass die Trocknung in einem Vakuumbandtrockner erfolgt.

## Claims

1.  Process for treating biological products in pieces, in which the products are subjected to heat treatment, expansion into a vacuum and drying in vacuo, characterised in that the products are subjected to treatment at excess pressure with a gaseous medium selected from the group consisting of inert gas, dry air, carbon dioxide and mixtures thereof and are then expanded into a vacuum at least at p > 1 bar.

2.  Process according to claim 1, characterised in that the products are expanded directly from an excess pressure into the vacuum, the excess pressure being > 1.1 bar.

3.  Process according to either of claims 1 or 2, characterised in that the products are expanded in a pretreatment stage.

4.  Process according to either of claims 1 or 2, characterised in that the products are expanded in the drying stage.

5.  Process according to one of claims 1 to 4, characterised in that expansion is effected over a period of < 30 seconds.

6.  Process according to one of claims 1 to 5, characterised in that dielectric effects are used to heat the products.

7.  Process according to one of claims 1 to 6, characterised in that the treatment at excess pressure lasts at least 10 seconds.

8.  Process according to one of claims 1 to 7, characterised in that drying is effected in a belt-type vacuum drier.

## Revendications

1.  Procédé pour traiter des produits biologiques en morceaux, selon lequel les produits sont soumis à un traitement thermique, une expansion ou gonflement dans le vide et un séchage dans le vide, caractérisé en ce que les produits sont soumis à un traitement par surpression appliquée par un milieu gazeux choisi dans le groupe comprenant un gaz inerte, de l'air sec, du gaz carbonique et des mélanges de ceux-ci, et sont détendus ensuite dans le vide avec un gradient de pression p > 1 bar au moins.

2.  Procédé selon la revendication 1, caractérisé en ce que les produits sont directement détendus dans le vide à partir d'une surpression supérieure à 1,1 bar.

3.	Procédé selon la revendication 1 ou 2, caractérisé en ce que les produits sont détendus dans une phase de traitement préalable.

4.	Procédé selon la revendication 1 ou 2, caractérisé en ce que les produits sont détendus dans la phase de séchage.

5.	Procédé selon une des revendications 1 à 4, caractérisé en ce que la détente s'effectue pendant un laps de temps inférieur à 30 secondes.

6.	Procédé selon une des revendications 1 à 5, caractérisé en ce que des effets diélectriques sont utilisés pour chauffer les produits.

7.	Procédé selon une des revendications 1 à 6, caractérisé en ce que le traitement par la surpression dure au moins 10 secondes.

8.	Procédé selon une des revendications 1 à 7, caractérisé en ce que le séchage s'effectue dans un sécheur à vide du type à bande.

EINGANGSPRODUKT

12

Vakuumeinrichtung

13

15 14 11

19

Vakuumeinrichtung

16

18 5

M 4

M

17

1 7

2

3

8

2

6

Kühleinrichtung

10

Heizeinrichtung

9

Vakuumeinrichtung

20

21

20

22

23

24

25

26

ENDPRODUKT